# EUROPÄISCHE PATENTANMELDUNG

(11) **EP 4 712 281 A1**
(43) Veröffentlichungstag der Anmeldung: **18.03.2026**
(21) Anmeldenummer: 25187672.8
(22) Anmeldetag: 04.07.2025
(51) Int. Cl.: H02G 3/22, H02G 15/013

(54) **LEITUNGSDURCHFÜHRUNG**

(30) Priorität: 12.09.2024 DE 102024126347
(71) Anmelder: Kaiser GmbH & Co. KG, 58579 Schalksmühle (DE); Attema B.V., 4203 NJ Gorinchem (NL)
(72) Erfinder: Molodynski, Damian, 58313 Herdecke (DE); Mohr, Sarah, 58579 Schalksmühle (DE); Schumacher, Paulus Michaël Johannes, 5283LN Boxtel (NL)
(74) Vertreter: Rentsch Partner AG

(57) **Zusammenfassung**

Die vorliegende Erfindung bezieht sich auf eine Leitungsdurchführung (1) für eine Leitung und eine Methode zur Installation einer Leitung in einer Leitungsdurchführung. Die Leitungsdurchführung umfasst hierbei eine sich um eine Mittelache von einem proximalen Ende (5) zu einem distalen Ende (6) erstreckende röhrenförmige Seitenwand (3), und eine an dem distalen Ende (6) der röhrenförmigen Seitenwand angeordnete Haltestruktur (4). Die Leitungsdurchführung (4) ist ferner derart ausgelegt ist, dass beim Durchführen einer Leitung (2) in eine erste Richtung die Leitung (2) durch die Haltestruktur (4) in einer Gleitposition gleitet, und beim Durchführen der Leitung (2) in einer zur ersten Richtung entgegengesetzten zweiten Richtung die Haltestruktur (4) in eine Fixierposition deformiert, in der die Haltestruktur (4) über eine Kraftübertragungsfläche (9) mit der röhrenförmigen Seitenwand (3) in Kontakt steht, und eine zum Durchführen initial auf die Leitung aufgebrachte Kraft über die Kraftübertragungsfläche (9) auf die röhrenförmige Seitenwand (3) übertragen wird, sodass eine radiale Deformation der Haltestruktur (4) und/oder des proximalen Endes (6) der Seitenwand (3) eine radial nach innen gerichtete Haltekraft auf die Leitung ausübt.

## Beschreibung

Die vorliegende Erfindung bezieht sich auf eine Leitungsdurchführung, ein Installationsteil mit einer Leitungsdurchführung, sowie ein Verfahren zum Installieren einer Leitung in einer Leitungsdurchführung.

Leitungsdurchführungen zum Durchführen einer oder mehrerer Leitungen durch eine Öffnung in einem Installationsteil sind aus dem Stand der Technik bekannt. Unter Leitungen sind hier Kabel, Lichtwellenleiter, Installationsrohre oder dergleichen zu verstehen. Unter einem Installationsteil ist beispielsweise eine Einfach-, oder eine Mehrfachleitungsdurchführung, eine Installationsdose oder dergleichen zu verstehen.

Zur Durchführung mehrerer Leitungen durch einen Gehäusedurchbruch sind z.B. Mehrfachkabeldurchführungen bekannt, die einen festen Rahmen mit darin eingebauten verformbaren Einsätzen aufweisen, die die einzuführenden Leitungen umschliessen und abdichten. Dabei werden häufig zunächst die Leitungen eingeführt und anschliessend die Einsätze um die Leitungen positioniert, um diese an dieser Stelle klemmend zu fixieren. Nach der Positionierung und Montage der Einsätze ist die Leitung somit nicht mehr verschiebbar und zugentsichert.

Installationsdosen, die in oder auf der Wand montiert werden, weisen ebenfalls Leitungsdurchführungen auf, um die Leitungen in die Dose zu führen. Häufig werden die Leitungen durch Öffnungen in einer Seitenwand und/oder im Dosenboden der Installationsdose eingeführt. In der Regel sind diese Leitungen jedoch nur begrenzt zuggesichert, so dass eine auf die Leitung ausgeübte höhere Zugkraft auf die an der Leitung befestigte Elektroinstallation übertragen wird.

Eine Aufgabe der Erfindung besteht darin eine verbesserte Leitungsdurchführung, bzw. Installationsteil mit einer derartigen Leitungsdurchführung bereitzustellen, welche sowohl eine gute Einführbarkeit als auch eine verbesserte Zugentlastung bereitstellt. Eine weitere Aufgabe der Erfindung besteht darin ein einfaches Verfahren zum Einführen und Zugentlasten einer Leitung in einer Leitungsdurchführung bereitzustellen.

Die erfindungsgemässe Leitungsdurchführung umfasst eine röhrenförmige Seitenwand und eine daran angeordnete Haltestruktur. Die Haltestruktur soll dabei ermöglichen die Leitung in eine erste Richtung einfach einzuführen und in eine der ersten Richtung entgegengesetzten zweiten Richtung die Leitung zugzuentlasten bzw. bis zu einer definierten an der Leitung anliegenden Kraft zu halten. Dies insbesondere ohne weitere Montageschritte zu benötigen.

Mit Vorzug ist die Haltestruktur integral mit der Seitenwand ausgebildet. Die Haltestruktur kann also an die Seitenwand angeformt sein. Die röhrenförmige Seitenwand erstreckt sich von einem proximalen Ende zu einem distalen Ende. Das proximale Ende kann zu der Befestigung an einem Installationsteil dienen. An dem distalen Ende ist die Haltestruktur angeordnet. Die Leitungsdurchführung kann hierbei mindestens zwei Positionen einnehmen: eine Gleitposition, in welcher eine durchgeführte Leitung durch die Leitungsdurchführung in eine erste Richtung (gleitend) geschoben werden kann, und eine Fixierposition, in welcher die Leitung bei Aufbringen einer (definierten) Kraft in eine der ersten Richtung entgegengesetzten zweiten Richtung auf die Leitung von der Haltestruktur gehalten wird. Hierdurch wird eine besonders schnelle Montage ermöglicht.

Die Leitungsdurchführung ist hierzu mit Vorzug derart ausgelegt, dass beim Durchführen der Leitung in der zweiten Richtung die Leitungsdurchführung in die Fixierposition deformiert wird. Je nach Ausgestaltung kann die Gleitposition ebenfalls durch Deformation von einem undeformierten Zustand der Leitungsdurchführung erreicht werden. Die Haltestruktur kann z.B. durch das Einbringen der Leitung von einem undeformierten Zustand in die Gleitposition deformieren. Ebenfalls ist es mit Vorteil möglich durch Deformation von der Fixierposition wieder in die Gleitposition zu gelangen. Diese Deformation kann ebenfalls einfach durch eine Rückbewegung der Leitung in die erste Richtung erreicht werden. Somit kann z.B. ein späteres Nachführen von Leitungslängen einfach umgesetzt werden, ohne dass eine aufwendige Demontage von Klemmelementen erfolgen muss, wie es z.B. im eingangs erwähnten Stand der Technik oftmals erforderlich ist.

In der Fixierposition ist die Haltestruktur (im Gegensatz zur Gleitposition) über eine Kraftübertragungsfläche mit der röhrenförmigen Seitenwand in Kontakt um eine initial auf die Leitung aufgebrachte Kraft zu übertragen. Über den Kontakt wird die initial auf die Leitung aufgebrachte Kraft von der Leitung auf die Haltestruktur an die röhrenförmige Seitenwand übertragen, sodass eine radiale Deformation der Haltestruktur und/oder der Seitenwand, bzw. insbesondere des distalen Endes der Seitenwand, eine radial nach innen gerichtete Haltekraft auf die Leitung ausübt. Ist die Haltekraft höher als die an der Leitung anliegende Kraft wird folglich eine Fixierung der Leitung erzielt. Die Haltekraft kann je nach Durchmesser der Leitung variieren. Beispielsweise kann die Haltekraft eine Leitung mit 10mm Durchmesser bei einem anliegenden Gewicht von 10kg halten.

Um die initial auf die Leitung in Richtung der Mittelachse aufgebrachte Kraft zumindest teilweise in eine radial wirkende Haltekraft zu konvertieren, ist die Haltestruktur vorzugsweise zumindest bereichsweise in Richtung der Mittelachse verschiebbar und/oder umklappbar. Ebenfalls bietet es sich an, wenn die röhrenförmige Seitenwand in einem undeformierten Zustand vom proximalen Ende zum distalen Ende konisch zuläuft. So kann z.B. durch eine bereichsweise Verschiebung der Haltestruktur in Richtung der Mittelachse relativ zu einer konischen Seitenwand die initiale Kraft in die radiale Haltekraft konvertiert werden. Ein ähnlicher Effekt kann erzielt werden durch Umklappen der Haltestruktur, insbesondere in die Seitenwand, in Kombination mit einer Ausdehnung der Seitenwand um die umgeklappte Haltestruktur. Somit kann die röhrenförmige Seitenwand in der Fixierposition am distalen Ende einen grösseren Aussendurchmesser aufweisen als in der Gleitposition. Diese radiale Ausdehnung der Seitenwand bewirkt ebenfalls eine radiale (zur Ausdehnung gegengerichtete) Haltekraft auf die Leitung. Die radiale Deformation kann demnach eine radiale Kompression der Haltestruktur (Kompression in radialer Richtung) und/oder eine radiale Ausdehnung der Seitenwand darstellen. Beide Deformationen bewirken separat oder gemeinsam eine Erhöhung der radial nach innen gerichteten Haltekraft auf die Leitung, wie nachstehend näher beschrieben.

Für das beschriebene Wirkprinzip sind mehrere mögliche Ausführungsformen denkbar. Diese können in zwei Gruppen unterteilt werden. Eine erste Gruppe, bei der die erste Richtung von dem proximalen Ende zum distalen Ende der Seitenwand verläuft und eine zweite Gruppe, wo die erste Richtung entgegengesetzt, also von dem distalen Ende zum proximalen Ende hin verläuft.

Für Varianten aus der ersten Gruppe ist die Haltestruktur mit Vorzug derart ausgelegt, dass diese beim Verschieben der Leitung in die zweite Richtung von der Gleitposition in die Fixierposition umklappt. Ergänzend kann beim Verschieben der Leitung in die erste Richtung die Haltestruktur ebenfalls (wieder) von der Fixierposition in die Gleitposition umklappen. Ebenfalls ist denkbar, dass bei weiterem Verschieben in die zweite Richtung ein weiteres Umklappen realisiert wird. Durch das erneute Umklappen wird die Seitenwand um die Haltestruktur in Richtung der zweiten Richtung) aufgerollt. Das erneute Umklappen, respektive das Aufrollen bewirkt also eine einhergehende stärkere Ausdehnung der Seitenwand und/oder Ausbildung einer grösseren Wulst um die Leitung. Die grössere Wulst bewirkt ebenfalls eine grössere Haltefläche an der Leitung aus. Durch das Aufrollen, als Ergebnis einer grösseren anliegenden initialen Kraft an der Leitung, wird also die Haltekraft weiter erhöht. Es ist demnach ein System geschaffen, dass dynamisch (zu einem gewissen Grad) an die initiale Kraft anpassbar ist.

Nachfolgend wird dieses Beispiel der Leitungsdurchführung zunächst in einem undeformierten Zustand beschrieben. Mit Vorteil ist die Haltestruktur ohne eingeführte Leitung in dem undeformierten Zustand. D.h. die Leitungsdurchführung kann derart ausgelegt sein, dass diese selbstständig von der deformierten Gleitposition und/oder Fixierposition in den undeformierten Zustand zurückkehrt, wenn keine Leitung eingeführt ist.

In dem undeformierten Zustand ist die Haltestruktur mit Vorteil in erster Richtung und im Bezug zur röhrenförmigen Seitenwand jenseits dem distalen Ende der röhrenförmigen Seitenwand angeordnet. Weiterhin kann die Haltestruktur radial nach innen von der röhrenförmigen Seitenwand winkelig abragen. Mit Vorteil ragt die Haltestruktur derart winkelig von der röhrenförmigen Seitenwand ab, dass diese im wesentlichen rechtwinkelig zu einer Mittelachse der Leitungsdurchführung angeordnet ist. In dem undeformierten Zustand weist die Haltestruktur, insbesondere an einer umlaufenden Kragenfläche der Haltestruktur, weiter mit Vorteil einen geringen Aussendurchmesser auf als die röhrenförmige Seitenwand am distalen Ende. Für eine gute Stabilität bei der Verformung kann die Kragenfläche hierbei in radialer Richtung zwischen einer verlängerten Fluchtlinie einer Innenseite und einer verlängerten Fluchtlinie einer Aussenseite der röhrenförmigen Seitenwand liegen. Die Durchmesserreduktion von der Aussenseite der röhrenförmigen Seitenwand am distalen Ende zur Kragenfläche der Haltestruktur erleichtert hierbei das Umklappen der Haltestruktur in die Fixierposition, in der die Haltestruktur zumindest teilweise in der röhrenförmigen Seitenwand angeordnet ist. Ebenso erleichtert der geringere Aussendurchmesser das Aufklappen der Haltestruktur von dem undeformierten Zustand in die Gleitposition. Bei diesem Aufklappen wird der Übergangsbereich zwischen dem distalen Ende und der Haltestruktur mit Vorteil komprimiert, was durch die entsprechende Durchmesserreduktion vereinfacht wird.

Für ein leichtes Umklappen weist die Haltestruktur mir Vorteil eine Umklappkerbe auf. Die Umklappkerbe dient dazu die Transition respektive das Umklappen von der Gleitposition in die Fixierposition zu erleichtern. Beim Umklappen der Haltestruktur der Gleitposition in die Fixierposition kann die Umklappkerbe hierzu komprimiert werden. Für ein einfaches Umklappen ist die Umklappkerbe in dem undeformierten Zustand mit Vorzug in radialer Richtung innerhalb (der verlängerten Fluchtlinie) der Innenseite der röhrenförmigen Seitenwand angeordnet. Ein besonderes leichtes Umklappen wird erreicht, wenn die Umklappkerbe in dem undeformierten Zustand in radialer Richtung innerhalb und beabstandet zur verlängerten Fluchtlinie der Innenseite der röhrenförmigen Seitenwand angeordnet ist.

Die Kraftübertragungsfläche kann auf der Innenseite der Leitungsdurchführung angeordnet sein. In dem undeformierten Zustand kann die Kraftübertragungsfläche in Bezug zur Haltestruktur und in die erste Richtung im Wesentlichen gegenüber der Haltefläche, wenn vorhanden, und/oder der Umklappkerbe angeordnet sein. Die Kraftübertragungsfläche ist radial ausserhalb und benachbart zur Gleitfläche angeordnet. Mit Vorteil umgibt die Gleitfläche die Durchgangsöffnung. In dem undeformierten Zustand steht die Kraftübertragungsfläche mit Vorzug im Wesentlichen senkrecht zur ersten Richtung. In dem Fall einer konischen Gleitfläche steht diese also in dem undeformierten Zustand winkelig auf der Kraftübertragungsfläche. Ergänzend kann die Kraftübertragungsfläche ebenfalls für einen initialen Kontakt mit einer in die erste Richtung eingeführten Leitung dienen.

Unabhängig von der Gruppe der Ausführungsformen, kann für eine Verstärkung des Gleiteffekts, respektive des Halteeffekts, an der Haltestruktur eine Gleitfläche für den Kontakt mit der Leitung in der Gleitposition und eine Haltefläche für den Kontakt mit der Leitung in der Halteposition vorgesehen sein. Die Haltefläche kann hierbei einen höheren Reibungskoeffizienten aufweisen als die Gleitfläche. Hierzu kann die Haltefläche z.B. strukturiert ausgestaltet sein.

Für die erste Gruppe der Ausführungsformen kann die Gleitfläche an einer Innenseite der Leitungsdurchführung angeordnet sein. In dem undeformierten Zustand kann die Gleitfläche in Bezug zur Haltestruktur und in die erste Richtung im Wesentlichen gegenüber der Kraftübertragungsfläche angeordnet sein. Mit Vorteil ist die Gleitfläche hierbei im undeformierten Zustand konisch zu der Mittelachse der Leitungsdurchführung und in die erste Richtung zulaufend angeordnet. Die konische Gleitfläche unterstützt hierbei die Krafteinleitung in Haltestruktur für die Deformation desselben in die Gleitposition. Mit Vorteil ist die Gleitfläche in dem undeformierten Zustand ebenfalls innerhalb der verlängerten Fluchtlinie der Innenseite der röhrenförmigen Seitenwand und insbesondere in radialer Richtung innerhalb der Umklappkerbe angeordnet.

Die designierte Haltefläche, wenn vorhanden, liegt mit Vorteil zumindest bereichsweise in der Fixierposition an der Leitung an und fixiert diese. Die Haltefläche ist in dem undeformierten Zustand bevorzugt an einer Aussenseite der Leitungsdurchführung angeordnet. Die Haltefläche kann hierbei im Wesentlichen senkrecht zur Mittelachse der Leitungsdurchführung angeordnet sein. Mit Vorteil ist die Haltefläche in radialer Richtung innerhalb und bevorzugt benachbart zu einer Umklappkerbe angeordnet. Somit ist die Haltefläche ebenfalls mit Vorteil in dem undeformierten Zustand innerhalb der verlängerten Fluchtlinie der Innenseite der röhrenförmigen Seitenwand angeordnet.

In der Gleitposition ist die Haltestruktur mit Vorteil in Richtung der ersten Richtung aufgeklappt. Darunter wird verstanden, dass ein Winkel zwischen der Gleitfläche und der Innenseite der röhrenförmigen Seitenwand grösser ist als im undeformierten Zustand. In der Gleitposition ist die Durchführöffnung mit Vorteil aufgeweitet und weist einen grösseren Durchmesser auf als in dem undeformierten Zustand. Der Durchmesser der aufgeweiteten Durchgangsöffnung entspricht hierbei dem Aussendurchmesser der durchgeführten Leitung. Die Umklappkerbe kann in der Gleitposition ebenfalls geweitet sein. D.h. zwei sich gegenüberliegende Schenkelseiten der Umklappkerbe können in der Gleitposition einen grösseren Abstand voneinander haben.

Für ein einfaches Umklappen von der Gleitposition in die Fixierposition kann die Haltestruktur zudem einen Ausleger umfassen. Mit Vorteil erstreckt sich dieser (in dem undeformierten Zustand) in Verlängerung der röhrenförmigen Seitenwand. Der Ausleger kann ferner zwischen der Kragenfläche und der Umklappkerbe angeordnet sein, respektive die Kragenfläche und eine Schenkelseite der Umklappkerbe können zumindest bereichsweise gegenüberliegend an dem Ausleger angeordnet sein. An einem äusseren Ende des Auslegers kann eine distale Fläche angeordnet sein. Beim Umklappen von der Gleitposition in die Fixierposition wird die Umklappkerbe mit Vorteil wie vorangehend beschrieben komprimiert. Hierbei treten mit Vorteil die gegenüberliegenden Schenkelseiten der Umklappkerbe miteinander in Kontakt. Alternativ kann ebenfalls die Haltefläche mit der an dem Ausleger angeordneten Schenkelfläche in Kontakt treten und sich an dieser zum Umklappen abstützen.

In der (umgeklappten) Fixierposition ist die Haltestruktur mit Vorteil zumindest bereichsweise innerhalb der röhrenförmigen Seitenwand angeordnet. Hierbei liegt die Kraftübertragungsfläche an der Innenseite der röhrenförmigen Seitenwand an. Dies hat den Effekt, dass die im Bereich des distalen Endes radial nach aussen deformierte röhrenförmige Seitenwand von innen stabilisiert und abgestützt wird. Es wird also auch hier Kraft von der Leitung über die Kraftübertragungsfläche an die röhrenförmige Seitenwand übertragen. Die röhrenförmige Seitenwand kann sich durch diese übertragene (Schub-)Kraft ferner stauchen. Durch die Stauchung kann eine Wanddicke der röhrenförmigen Seitenwand zudem lokal grösser werden und/oder die röhrenförmige Seitenwand kann sich am distalen Ende radial ausweiten. Somit kann die röhrenförmige Seitenwand in der Fixierposition am distalen Ende einen grösseren Aussendurchmesser aufweisen als in der Gleitposition. Die stärker nach aussen ausgeweitete und/oder gestauchte Seitenwand bewirkt hierbei eine radial nach innen gerichtete Gegenkraft, die Haltestruktur mit der Kraftübertragungsfläche stärker gegen die Leitung drückt und eine erhöhte Haltekraft bewirkt. Die Aufweitung und/oder Stauchung der Seitenwand kann unterstützt werden, indem die röhrenförmige Seitenwand zum distalen Ende hin konisch zuläuft.

Ein Beispiel einer Ausführungsform aus der zweiten Gruppe von Leitungsdurchführungen, bei dem die erste Richtung von dem distalen Ende zum proximalen Ende der Seitenwand verläuft, wird nachstehend beschrieben.

Gemäss diesem Beispiel umfasst die Haltestruktur eine deformierbare Ringstruktur. Die Ringstruktur weist vorzugsweise einen geschlossenen Querschnitt auf, welcher (in einem undeformierten Zustand) oval, polygen oder kreisförmig sein kann. Beispielsweise kann die Ringstruktur einen O- Ring umfassten. Die deformierbare Ringstruktur kann hierbei sowohl in der Gleitposition als auch in der Fixierposition in der röhrenförmigen Seitenwand angeordnet sein.

Weiterhin kann an der Ringstruktur eine Gleitfläche und/oder eine Haltefläche angeordnet sein. Die Gleitfläche und die Haltefläche können aneinander angrenzen oder benachbart zueinander sein. Weiterhin können die Gleitfläche und die Haltefläche winkelig zueinander angeordnet sein. Die Haltefläche und die Kraftübertragungsfläche sind mit Vorteil in Bezug auf einen Querschnitt der Ringstruktur im Wesentlichen gegenüberliegend voneinander angeordnet. Die Kraftübertragungsfläche weist hierbei zur Innenseite der Seitenwand hin.

In der Fixierposition weist die deformierbare Ringstruktur mit Vorzug in Richtung der Mittelachse einen kleineren Abstand zum distalen Ende der Seitenwand auf, als in der Gleitposition. Dieser Abstand kann durch eine Verbindungsstruktur variiert werden, über welche die Ringstruktur an dem distalen Ende der Seitenwand wirkverbunden, insbesondere angeformt, ist Hierzu ist die Verbindungsstruktur mit Vorzug in Richtung der Mittelachse komprimierbar und/oder zusammenlegbar. Dafür bietet es sich an, wenn die Verbindungsstruktur dünnwandig ist. Beispielsweise kann diese eine Membran umfassen. Alternativ oder ergänzend kann die Haltestruktur ebenfalls zwei oder drei um den Umfang verteilte Befestigungsarme umfassen. Die Befestigungsarme können z.B. Gelenke aufweisen, welche das Zusammenlegen der Befestigungsarme in Richtung der Mittelachse erleichtern.

Für ein einfaches Einführen ist die Leitungseinführung hierbei derart dimensioniert, dass in der Gleitposition die Haltestruktur im wesentlichen undeformiert an der Leitung anliegt. Mit Vorzug steht die Haltestruktur ferner nach aussen hin in keinen oder nur losen Kontakt mit der Innenseite der Seitenwand. Es wird also keine Kraft zur Seitenwand hin über die Kraftübertragungsfläche übertragen.

Wird die Leitung nun in Richtung der zweiten Richtung (zum distalen Ende hin) verschoben, verschiebt sich zunächst die Ringstruktur zum distalen Ende hin und tritt in Kontakt mit der Seitenwand an der Kraftübertragungsfläche. Durch den Kontakt und die anliegende Kraft deformiert sich die Haltestruktur anschliessend in die Fixierposition, in welcher die Ringstruktur zwischen der Seitenwand und der Leitung verklemmt ist. Die initial auf die Leitung aufgebrachte Kraft wird also über die Kraftübertragungsfläche auf die röhrenförmige Seitenwand übertragen und bewirkt eine radiale Kompression der Haltestruktur. Durch die Kompression wird die radial nach innen gerichtete Haltekraft erzeugt. Die Haltekraft kann die durchgeführte Leitung bis zu einer definierten initialen Kraft halten.

Unabhängig von der Gruppe von Ausführungsformen, kann die Leitungsdurchführung ganz oder bereichsweise aus mindestens einem weichelastischen Material bestehen. Je nach Anwendung kann es sich zudem anbieten, unterschiedliche Materialien für verschiedene Bereiche der Haltestruktur zu verwenden. Bei der Verwendung von zwei unterschiedlichen Materialien bestehen vorzugsweise der Bereich um die Umklappkerbe und/oder um die Kraftübertragungsfläche aus dem weichelastischerem der beiden Materialien.

Je nach Anwendung und ebenfalls unabhängig von den Unabhängig von der Gruppe von Ausführungsbeispielen kann die Durchführöffnung der Leitungsdurchführung initial d.h. vor dem Einführen der Leitung, von einem heraustrennbaren Wandbereich verschlossen sein. Der heraustrennbare Wandbereich kann hierbei von einer Dünnstelle ganz oder teilweise umgeben sein. Der heraustrennbare Wandbereich kann zwischen der Kraftübertragungsfläche und der Gleitfläche an die Haltestruktur angeformt sein. Ferner kann der heraustrennbare Wandbereich eine oder mehrere darin angeordnete Membrane umfassen. Die Membran(e) dienen dazu mit einer Leitung durchstochen zu werden. Dies hat den Vorteil, dass auch Leitungen mit einem kleineren Durchmesser dichtend aufgenommen werden können.

Die vorliegende Erfindung bezieht sich ebenfalls auf ein Installationsteil, wie ein Gehäuse, eine Einfach- oder Mehrfachleitungsdurchführung, eine Installationsdose oder ähnliches, mit einer oder mehrerer einer Leitungsdurchführungen wie vorangehend beschrieben. Wenn mehrere derartige Leitungsdurchführungen vorhanden sind, können diese über Wandsegmente aus dem gleichen weichelastischen Material wie die Leitungsdurchführungen miteinander verbunden sein. Dies vereinfacht die Herstellung eines derartigen Installationsteils.

Das Installationsteil, insbesondere in Form einer Mehrfachleitungsdurchführung, kann je nach Anwendung ferner einen Wandausschnitt und eine Führungsstruktur zum Einschieben des Wandausschnitts umfassen. Mit Vorteil ist die Führungsstruktur als umlaufenden Rahmen ausgestaltet. Die Führungsstruktur kann hierbei in gleiche Richtung von dem Wandausschnitt abragen, wie die jeweiligen röhrenförmigen Seitenwände der ein oder mehreren Leitungsdurchführungen.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante der Leitungsdurchführung gemäss der Erfindung in einem undeformierten Zustand;
- Fig. 2: Die Leitungsdurchführung gemäss Figur 1 in einem undeformierten Zustand mit einer Leitung;
- Fig. 3: Die Leitungsdurchführung gemäss Figur 1 in einer Gleitposition;
- Fig. 4: Die Leitungsdurchführung gemäss Figur 1 in einer Transition von der Gleitposition in eine Fixierposition;
- Fig. 5: Die Leitungsdurchführung gemäss Figur 1 in der Fixierposition;
- Fig. 6: Die Leitungsdurchführung gemäss Figur 1 in einer aufgerollten Fixierposition;
- Fig. 7: Die Leitungsdurchführung gemäss Figur 1 in einer weiter aufgerollten Fixierposition;
- Fig. 8: Ein Installationsteil mit einer Leitungsdurchführung in einer perspektivischen Ansicht von hintern;
- Fig. 9: Das Installationsteil gemäss Figur 1 in einer perspektivischen Ansicht von vorne;
- Fig. 10: Eine zweite Variante einer Leitungsdurchführung gemäss der Erfindung in einer perspektivischen und teilweise geschnittenen Ansicht;
- Fig. 11: Die Leitungsdurchführung gemäss Figur 10 in einem undeformierten Zustand vor dem Einführen einer Leitung in einer Schnittansicht;
- Fig. 12: Die Leitungsdurchführung gemäss Figur 10 in einer Gleitposition in einer Schnittansicht;
- Fig. 13: Die Leitungsdurchführung gemäss Figur 10 in einer Fixierposition in einer Schnittansicht.

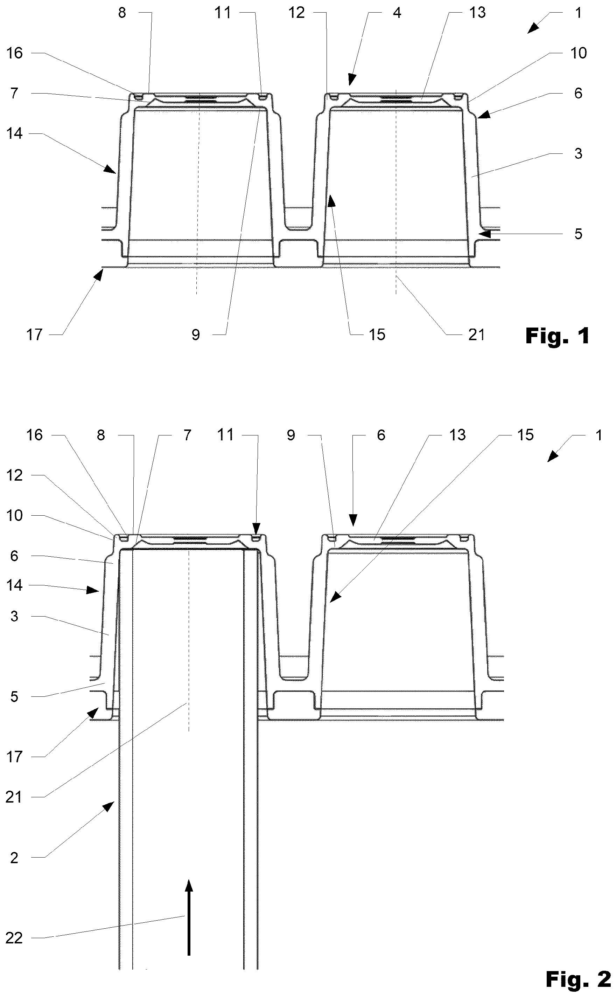

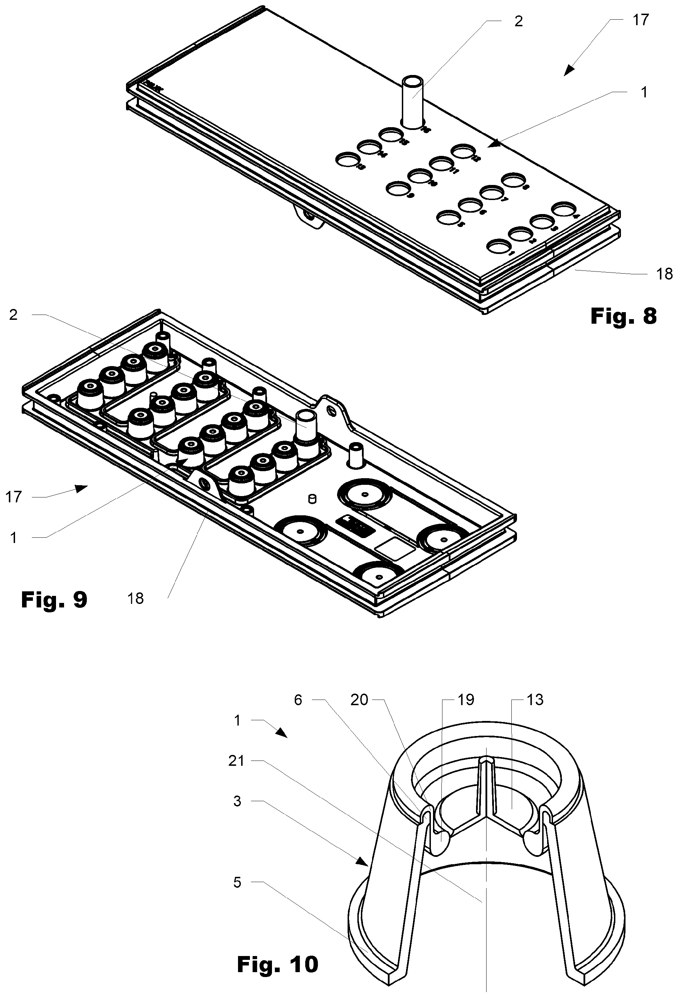

Wie bereits erwähnt, sind das beschriebene Wirkprinzip mehrere mögliche Ausführungsbeispiele denkbar. Diese können in zwei Gruppen unterteilt werden, bei denen sich die erste (und zweite) Richtung im Bezug zur Erstreckungsrichtung der Seitenwand unterscheiden. Die nachstehend in den **Figuren 1 - 9** beschriebene erste Variante der Leitungsdurchführung gehört hierbei zur ersten Gruppe und die in den **Figuren 10 - 13** beschriebene zweite Variante der Leitungsdurchführung gehört zur zweiten Gruppe.

**Figur 1** zeigt die Leitungsdurchführung 1 in einem undeformierten Zustand ohne eine durchgeführte Leitung. In dem dargestellten undeformierten Zustand läuft die röhrenförmige Seitenwand 3 erkennbar zum distalen Ende 6 konisch zu. Das proximale Ende 5 ist im vorliegenden Beispiel das Ende, an welchem die Leitungsdurchführung 1 an einem Installationsteil 17 befestigt ist. Von dem distalen Ende 6 der röhrenförmigen Seitenwand 3 ragt winkelig nach innen eine Haltestruktur 4 zum Befestigen der Leitung 2 ab, sodass die Haltestruktur 4 in erster Richtung 22 und im Bezug zur röhrenförmigen Seitenwand 3 jenseits dem distalen Ende 6 angeordnet ist. Erkennbar ist ebenfalls, dass die Haltestruktur 4, insbesondere eine Kragenfläche 10 der Haltestruktur 4, einen geringen Aussendurchmesser aufweist als die röhrenförmige Seitenwand 3 am distalen Ende 6.

Die Haltestruktur 4 umfasst eine Gleitfläche 7 zum Entlanggleiten einer in eine erste Richtung 22 verschobenen Leitung 2 und eine Kraftübertragungsfläche 6 zum Halten der Leitung 2. Im vorliegenden Beispiel verläuft die erste Richtung 22 parallel zur Mittelachse 21 und von dem proximalen Ende zum distalen Ende der Seitenwand in. Während die Haltefläche 8 in dem undeformierten Zustand an einer Aussenseite 14 der Leitungsdurchführung 1 angeordnet ist, ist die Gleitfläche 7 an einer Innenseite 15 der Leitungsdurchführung 1 angeordnet. Ebenfalls auf der Innenseite 15 ist eine Kraftübertragungsfläche 9 angeordnet. Hierbei liegt im vorliegende Ausführungsbeispiel die Haltefläche 8 der Gleitfläche 7 in Bezug zur Haltestruktur 3 und in die erste Richtung 22 im Wesentlichen gegenüber.

Die Kraftübertragungsfläche 9 kann beim Einschieben der Leitung 2 in die erste Richtung 22 als Krafteinleitungspunkt zum Einleiten einer Deformationskraft von der Leitung 2 auf die Leitungsdurchführung 1 dienen. In **Figur 2** ist die Momentaufnahme dargestellt, in der eine Leitung 2 an der Kraftübertragungsfläche 9 mit der Leitungsdurchführung 1 in Kontakt tritt.

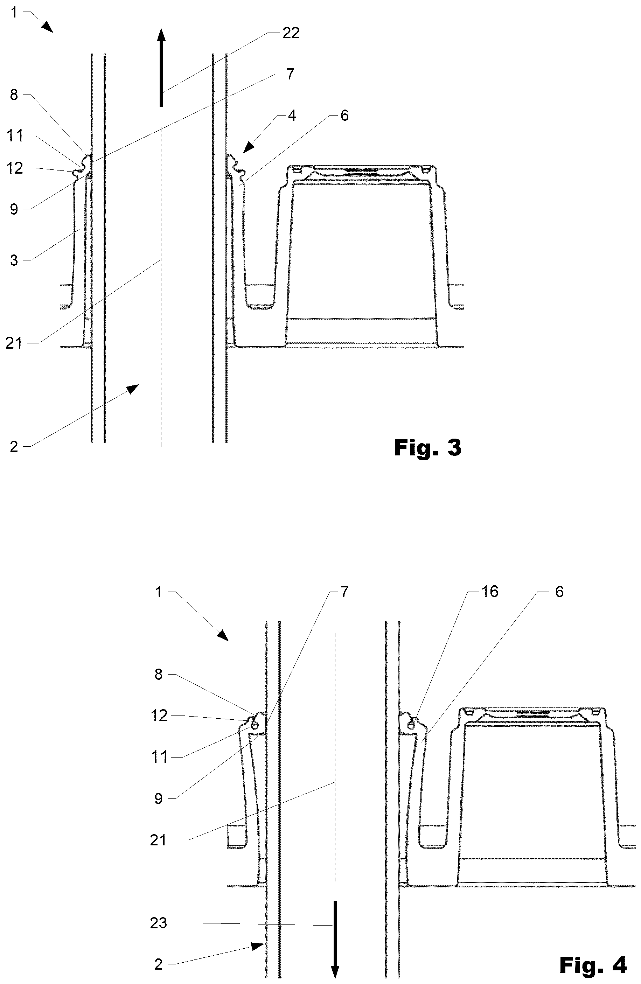

Wird die Leitung 2 tiefer in die erste Richtung 22 geschoben, wird eine Deformationskraft in die Leitungsdurchführung 1 eingeleitet und die Haltestruktur 4 deformiert sich in die Gleitposition, wie in **Figur 3** dargestellt. In **Figur 3** ist die Leitungsdurchführung 1 nun ohne einen heraustrennbaren Wandbereich 13 dargestellt, welcher in der Haltestruktur 4 vorhanden sein kann um die Durchführöffnung initial zu verschliessen. In der Gleitposition ist die Haltestruktur 4 in Richtung der ersten Richtung 22 aufgeklappt. Darunter wird verstanden, dass ein Winkel zwischen der Kraftübertragungsfläche 9 und der Innenseite 15 der röhrenförmigen Seitenwand 3 grösser wird. Die Gleitfläche 7 schmiegt sich an die Leitung 2 an und ist im Wesentlichen parallel zu einer Mittelachse 21 der Leitungsdurchführung 1 ausgerichtet. Ebenfalls erkennbar ist die röhrenförmige Seitenwand 3 radial aufgeweitet, so dass der Aussendurchmesser am distalen Ende 6 grösser ist als im undeformierten Zustand. Mit Vorteil steht die Leitung 2 in der Gleitposition lediglich mit der Gleitfläche 7 in Kontakt, sodass die Reibungskräfte zwischen der Leitung und der Haltestruktur geringgehalten werden.

Wird die Leitung 2 nun in eine der ersten Richtung 22 entgegengesetzten zweiten Richtung 23 verschoben, deformiert sich die Haltestruktur 4 von der Gleitposition in die Fixierposition. Die Transition zwischen der von der Gleitposition in die Fixierposition ist in **Figur 4** darstellt. Beim Verschieben der Leitung 2 in die zweite Richtung 23 komprimiert sich die Haltestruktur 4 im Bereich der Umklappkerbe 11. Die Umklappkerbe 11 ist an der Aussenseite 14 der Haltestruktur 4 radial ausserhalb und bevorzugt benachbart zur Haltefläche 8 angeordnet. Durch die Deformation rollt sich die Haltestruktur 4 wie dargestellt auf. Hierbei kann die Haltefläche 8 mit einer der beiden Schenkelflächen 16 der Umklappkerbe 11 in Kontakt treten und sich an dieser zum Umklappen abstützen. Die hier übertragende Kraft wird in die röhrenförmige Seitenwand 3 übertragen. Hierzu ist es vorteilhaft, wenn ein Ausleger 12, an welcher die entsprechende Schenkelfläche 16 der Umklappkerbe 11 angeordnet ist, sich in Verlängerung der röhrenförmigen Seitenwand 3 erstreckt. Durch diese Kraftübertragung wird ebenfalls die röhrenförmige Seitenwand 3 im Bereich des distalen Endes 6 weiter radial nach aussen geweitet. Der Aussendurchmesser der röhrenförmigen Seitenwand 3 am distalen Ende 6 ist nun im Vergleich zur ersten und Fixierposition am grössten.

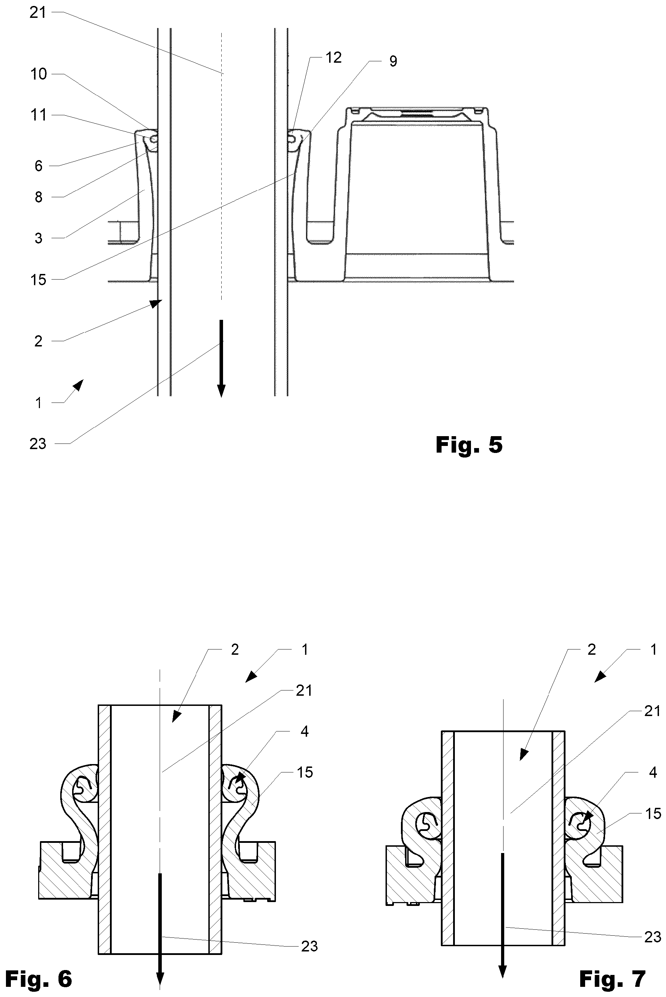

In **Figur 5** ist die Fixierposition der Leitungsdurchführung 1 nach dem Umklappen der Haltestruktur 4 dargestellt. Der Aussendurchmesser der röhrenförmigen Seitenwand 3 am distalen Ende 6 ist nun wieder kleiner als beim Umklappen von der ersten zur Fixierposition, jedoch grösser als in der Gleitposition. Die Haltefläche 8 wird durch die deformierte röhrenförmige Seitenwand 3 mit einer grösseren Kraft an die Leitung 2 gepresst, was eine grössere Haltekraft bedingt. Unterstützend liegt die Kraftübertragungsfläche 9 an der Innenseite 15 der röhrenförmigen Seitenwand 3 an. Der Ausleger 12, respektive die darauf angeordnete Kragenfläche 10 steht im Wesentlichen senkrecht auf der eingeführten Leitung 2 und schliesst die Leitungsdurchführung 1 ab. Die distale Fläche des Auslegers 12 kann ebenfalls an der Leitung anliegen und diese ergänzend halten und/oder abdichten.

**Figur 6** und **Figur 7** zeigen die Leitungsdurchführung 1 je in einer aufgerollten Fixierposition. Diese aufgerollten Fixierpositionen können erreicht werden, wenn die anliegende Kraft ausreichend gross ist, sodass nach Erreichen der Fixierposition gemäss **Figur 5** ein weiteres Umklappen, respektive Aufrollen der Seitenwand 3 erzeugt wird. Das erneute Umklappen, respektive das Aufrollen der Seitenwand 3 um die Haltestruktur 4 bewirkt eine einhergehende stärkere Ausdehnung der Seitenwand 3 und Ausbildung einer grösseren Wulst mit einem grösseren Aussendurchmesser um die Leitung 2. Zeitgleich wird die Seitenwand 3 erkennbar in zweite Richtung 23 komprimiert, was eine Ausweitung derselben in die radiale Richtung bewirkt und demnach eine zusätzliche Komponente der radialen Haltekraft generiert. Die grössere Wulst bildet ebenfalls eine grössere Kontaktfläche mit der Leitung aus. Durch das Aufrollen, als Ergebnis einer grösseren anliegenden initialen Kraft an der Leitung, wird also die Haltekraft auf die Leitung 2 einhergehend erhöht.

**Figur 8** und **Figur 9** zeigen ein Installationsteil 17 mit mehreren Leitungsdurchführungen 1 in einer perspektivischen Ansicht von hintern und von vorne. Die Leitungseinführungen 1 können wie im Zusammenhang mit den **Figuren 1 bis 7** beschrieben oder entsprechend den anderen in der allgemeinen Beschreibung genannten Varianten ausgeführt sein. Die jeweiligen Leitungseinführungen 1 können ferner aus einem weichelastischen Material bestehen und integral miteinander verbunden sein. Das Installationsteil 17 umfasst zudem einen umlaufenden Rahmen 18 mit einer Führungsstruktur zum Einschieben des Installationsteils in einen entsprechenden Einschub eines Gehäuses. Der Rahmen 18 kann hierbei in gleiche Richtung von dem Wandausschnitt abragen, wie die röhrenförmige(n) Seitenwände 3 der jeweiligen Leitungsdurchführungen 1.

In den **Figuren 10** bis **13** wird eine zweite Variante einer erfindungsgemässen Leitungsdurchführung 1 dargestellt, welche aus der zweiten Gruppe von Ausführungsformen stammt. Bei der zweiten Gruppe verläuft die erste Richtung 22 von dem distalen Ende 6 zum proximalen Ende 5 der Seitenwand 3 hin.

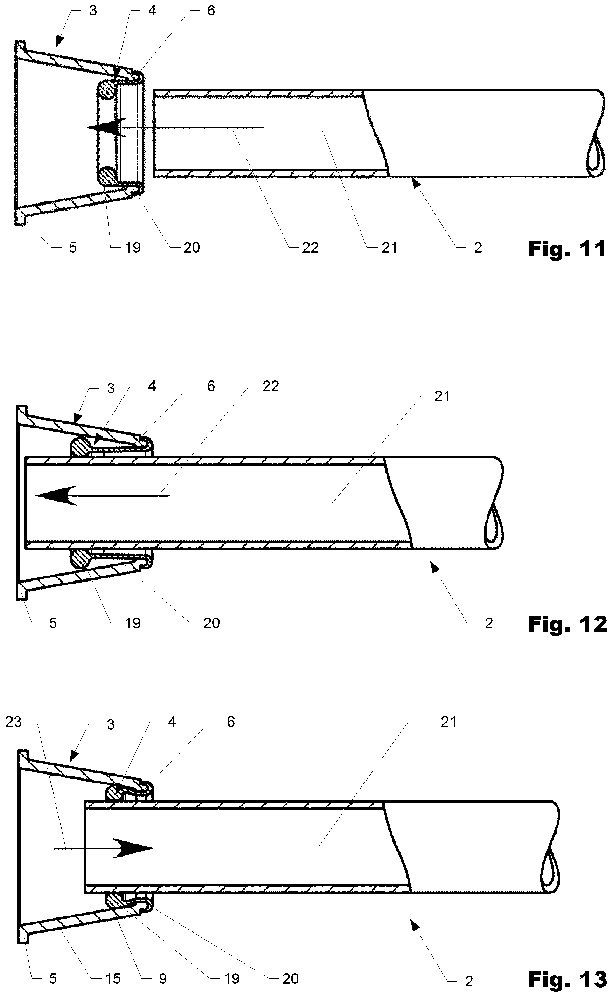

**Figur 10** illustriert hierbei den undeformierten Zustand der Leitungsdurchführung in einer perspektivischen und teilweise geschnittenen Ansicht und **Figur 11** den undeformierten Zustand in einer Schnittansicht von der Seite vor dem Einführen der Leitung 2 aus der ersten Richtung 22. Erkennbar unterscheidet sich die zweite Variante in der Ausgestaltung der ebenfalls am distalen Ende 6 der konischen Seitenwand 3 angeordneten Haltestruktur 4. Die Haltestruktur 4 der zweiten Variante umfasst eine deformierbare Ringstruktur 19, welche wie darstellt einen O- Ring darstellen kann. Andere Querschnitte der Ringstruktur 19 sind jedoch ebenfalls denkbar. Die Ringstruktur 19 ist ferner über eine Verbindungsstruktur 20 mit dem distalen Ende 6 der röhrenförmigen Seitenwand 3 verbunden. In dem darstellten undeformierten Zustand ist die Ringstruktur 19 in der röhrenförmigen Seitenwand 3 angeordnet. Für eine gute Funktionalität ist diese jedoch ebenfalls in der Gleitposition als auch in der Fixierposition in der Seitenwand 3 angeordnet, wie in den nachstehenden Figuren ersichtlich.

**Figur 12** illustriert die Gleitposition der zweiten Variante der Leitungsdurchführung 1. Erkennbar ist die vorliegende Variante derart dimensioniert, dass in der Gleitposition die Haltestruktur im Wesentlichen undeformiert an der Leitung 2 anliegt. Mit Vorzug steht diese hierzu wie dargestellt nach aussen hin in keinem oder nur losen Kontakt mit der Innenseite 15 der Seitenwand 3. Hierzu kann die Ringstruktur 19 einen maximal möglichen Abstand zum distalen Ende 6 der Seitenwand 3 einnehmen, respektive die Verbindungsstruktur 20 ist maximal gestreckt und/oder ausgeklappt. Hierzu bietet es sich an, wenn die Verbindungsstruktur 20 dünnwandig ist. Beispielsweise kann diese eine Membran und/oder mindestens zwei oder drei um den Umfang verteilte Befestigungsarme umfassen.

Wird die Leitung 2 in Richtung der Fixierposition (zum distalen Ende hin) verschoben, deformiert sich die Haltestruktur 4 mit der Verbindungsstruktur 20 in die Fixierposition, wie in **Figur 13** dargestellt.

In der Fixierposition weist die deformierbare Ringstruktur 19 nun in Richtung der Mittelachse 21 einen deutlich kleineren Abstand zum distalen Ende 6 der Seitenwand 3 auf, als in der Gleitposition. Die Verbindungsstruktur 20 ist in Richtung der Mittelachse 21 komprimiert und/oder zusammengelegt. Ferner ist die Ringstruktur 19 zwischen der Seitenwand 3 und der Leitung 2 verklemmt. Die Haltestruktur 4 tritt also mit einer Kraftübertragungsfläche 9 mit der Innenseite 15 der Seitenwand 3 in Kontakt. Die initial auf die Leitung 2 aufgebrachte Kraft wird über die Kraftübertragungsfläche 9 auf die röhrenförmige Seitenwand 3 übertragen und bewirkt eine radiale Kompression der Haltestruktur 4, respektive der Ringstruktur 19. Durch die Kompression wird eine radial nach innen und auf die Leitung 2 gerichtete Haltekraft auf die Leitung 2 ausgeübt und die Leitung 2 bis zu einer definierten Kraft gehalten.

**LISTE DER BEZUGSZEICHEN**

| | | | |
|---|---|---|---|
| 1 | Leitungsdurchführung | 13 | Wandbereich |
| 2 | Leitung | 14 | Aussenseite |
| 3 | Seitenwand | 15 | Innenseite |
| 4 | Haltestruktur | 16 | Schenkelfläche |
| 5 | Proximales Ende | 17 | Installationsteil |
| 6 | Distales Ende | 18 | Rahmen |
| 7 | Gleitfläche | 19 | Ringstruktur |
| 8 | Haltefläche | 20 | Verbindungsstruktur |
| 9 | Kraftübertragungsfläche | 21 | Mittelachse |
| 10 | Kragenfläche | 22 | Erste Richtung |
| 11 | Umklappkerbe | 23 | Zweite Richtung |
| 12 | Ausleger | | |

## Patentansprüche

1. Leitungsdurchführung (1) für eine Leitung (2), die Leitungsdurchführung (1) umfassend
a. eine sich um eine Mittelache (21) von einem proximalen Ende (5) zu einem distalen Ende (6) erstreckende röhrenförmige Seitenwand (3), und eine an dem distalen Ende (6) der röhrenförmigen Seitenwand (3) angeordnete Haltestruktur (4), wobei
b. die Leitungsdurchführung (4) derart ausgelegt ist, dass
i. beim Durchführen der Leitung (2) in eine erste Richtung (22) die Leitung (2) durch die Haltestruktur (4) in einer Gleitposition gleitet, und
ii. beim Durchführen der Leitung (2) in einer zur ersten Richtung (22) entgegengesetzten zweiten Richtung (23) die Leitungsdurchführung (1) in eine Fixierposition deformiert, in der die Haltestruktur (4) über eine Kraftübertragungsfläche (9) mit der röhrenförmigen Seitenwand (3) in Kontakt steht, und eine zum Durchführen initial auf die Leitung (2) aufgebrachte Kraft über die Kraftübertragungsfläche (9) auf die röhrenförmige Seitenwand (3) übertragen wird, sodass eine radiale Deformation (3) der Haltestruktur (4) und/oder des distalen Endes (6) der Seitenwand (3) eine radial nach innen gerichtete Haltekraft auf die Leitung (2) ausübt.

2. Leitungsdurchführung (1) gemäss Patentanspruch 1, **dadurch gekennzeichnet, dass** die radiale Deformation der Haltestruktur (4) eine radiale Kompression ist.

3. Leitungsdurchführung (1) gemäss einem der vorangehenden Patentansprüche, **dadurch gekennzeichnet, dass** die radiale Deformation des distalen Endes (6) der Seitenwand (3) eine Aufweitung ist.

4. Leitungsdurchführung (1) gemäss Patentanspruch 3, **dadurch gekennzeichnet, dass** die röhrenförmige Seitenwand (3) in der Fixierposition am distalen Ende (6) einen grösseren Aussendurchmesser aufweist als in der Gleitposition.

5. Leitungsdurchführung (1) gemäss einem der vorangehenden Patentansprüche, **dadurch gekennzeichnet, dass** die röhrenförmige Seitenwand (3) in einem undeformierten Zustand vom proximalen Ende (5) zum distalen Ende (6) konisch zuläuft.

6. Leitungsdurchführung (1) gemäss einem der vorangehenden Patentansprüche, **dadurch gekennzeichnet, dass** die Haltestruktur (4) in der Gleitposition mit einer Gleitfläche (7) und/oder in der Fixierpositionen mit einer Haltefläche (8) an der Haltestruktur (4) anliegt.

7. Leitungsdurchführung (1) gemäss einem der vorangehenden Patentansprüche, **dadurch gekennzeichnet, dass** die Haltestruktur (4) zumindest bereichsweise in Richtung der Mittelachse (21) verschiebbar und/oder umklappbar ist.

8. Leitungsdurchführung (1) gemäss einem der vorangehenden Patentansprüche, **dadurch gekennzeichnet, dass** die Haltestruktur (4) eine deformierbare Ringstruktur (19), insbesondere einen O-Ring, umfasst.

9. Leitungsdurchführung (1) gemäss Patentanspruch 8 **dadurch gekennzeichnet, dass** die deformierbare Ringstruktur (19) in der Gleitposition und in der Fixierposition in der röhrenförmigen Seitenwand angeordnet ist.

10. Leitungsdurchführung (1) gemäss Patentanspruch 8 oder 9 **dadurch gekennzeichnet, dass** die deformierbare Ringstruktur (19) in der Fixierposition in Richtung der Mittelachse einen kleineren Abstand zum distalen Ende (6) der Seitenwand (3) aufweist, als in der Gleitposition.

11. Leitungsdurchführung (1) gemäss einem der Patentansprüche 8 bis 10 **dadurch gekennzeichnet, dass** die deformierbare Ringstruktur (19) über eine Verbindungsstruktur (20) an dem distalen Ende (6) angeformt ist.

12. Leitungsdurchführung (1) gemäss Patentanspruch 11 **dadurch gekennzeichnet, dass** die Verbindungsstruktur (20) in Richtung der Mittelachse stauchbar und/oder zusammenlegbar ist.

13. Leitungsdurchführung (1) gemäss Patentanspruch 7, **dadurch gekennzeichnet, dass** die Leitungsdurchführung (1) eine Umklappkerbe (11) aufweist, um welche die Haltestruktur (4) von der Gleitposition in die Fixierposition umklappbar ist.

14. Leitungsdurchführung (1) gemäss Patentanspruch 13, **dadurch gekennzeichnet, dass** die röhrenförmige Seitenwand (3) in der Fixierposition in Richtung der Mittelachse gestaucht und/oder zumindest bereichsweise aufgerollt ist.

15. Leitungsdurchführung (1) gemäss einem der vorangehenden Patentansprüche, **dadurch gekennzeichnet, dass** die Haltestruktur (4) und/oder die röhrenförmige Seitenwand (3) ganz oder bereichsweise aus mindestens einem weichelastischen Material besteht.

16. Leitungsdurchführung (1) gemäss einem der vorangehenden Patentansprüche, **dadurch gekennzeichnet, dass** eine in der Haltestruktur (3) angeordnete Durchführöffnung zum Durchführen der Leitung (2) in einem initialen Zustand von einem heraustrennbaren Wandbereich (13) verschlossen ist.

17. Installationsteil (17), insbesondere ein Gehäuse oder eine Mehrfachleitungsdurchführung oder eine Installationsdose, mit einer Leitungsdurchführung (1) gemäss einem der vorangehenden Patentansprüche.

18. Verfahren zum Installieren einer Leitung in einer Leitungsdurchführung, das Verfahren umfassend die folgenden Verfahrensschritte:
a. Bereitstellen einer Leitungsdurchführung (1) mit
i. einer sich um eine Mittelache (21) von einem proximalen Ende (5) zu einem distalen Ende (6) erstreckende röhrenförmige Seitenwand (3), und
ii. einer an dem distalen Ende (6) der röhrenförmigen Seitenwand angeordneten Haltestruktur (4) zum Befestigen der Leitung (2),
b. Bereitstellen einer Leitung (2)
c. Einführen der Leitung (2) in eine erste Richtung (22) durch die Haltestruktur (4) in einer Gleitposition, und
d. Verschieben der Leitung (2) in eine der ersten Richtung (22) entgegengesetzte zweite Richtung (23), sodass die Haltestruktur (4) in eine Fixierposition deformiert, in der diese über eine Kraftübertragungsfläche (9) mit der röhrenförmigen Seitenwand (3) in Kontakt tritt, und eine zum Durchführen initial auf die Leitung (2) aufgebrachte Kraft über die Kraftübertragungsfläche (9) auf die röhrenförmige Seitenwand (3) übertragen wird und eine radiale Deformation der Haltestruktur (4) und/oder des proximalen Endes (6) der röhrenförmigen Seitenwand (3) eine radial nach innen gerichtete Haltekraft auf die Leitung (2) ausübt.
